# FASCICULE DE BREVET EUROPEEN

(11) **EP 3 035 108 B1**
(45) Date de publication et mention de la délivrance du brevet: **06.12.2017**
(21) Numéro de dépôt: 15200906.4
(22) Date de dépôt: 17.12.2015
(51) Int. Cl.: G02B 27/01, G02B 27/30, G02B 5/32

(54) **DISPOSITIF OPTIQUE DE PROJECTION POUR DES MOYENS D'AFFICHAGE TELS QUE DES LUNETTES A REALITE AUGMENTEE**
OPTISCHE PROJEKTIONSVORRICHTUNG FÜR ANZEIGEMITTEL, WIE AUGMENTED-REALITY-BRILLEN
PROJECTING OPTICAL DEVICE FOR DISPLAY MEANS SUCH AS AUGMENTED-REALITY GLASSES

(30) Priorité: 19.12.2014 FR 1462844
(43) Date de publication de la demande: 22.06.2016
(73) Titulaire: Commissariat à l'Énergie Atomique et aux Énergies Alternatives, 75015 Paris (FR)
(72) Inventeur: GIUDICELLI, Sébastien, 75014 Paris (FR); GETIN, Stéphane, 38100 GRENOBLE (FR)
(74) Mandataire: Brevalex

(56) Documents cités:
- EP-A1- 2 808 725
- WO-A1-2014/188149
- AMITAI Y ET AL: "VISOR-DISPLAY DESIGN BASED ON PLANAR HOLOGRAPHICS OPTICS", APPLIED OPTICS, OPTICAL SOCIETY OF AMERICA, WASHINGTON, DC; US, vol. 34, no. 8, 10 mars 1995 (1995-03-10), pages 1352-1356, XP000491221, ISSN: 0003-6935, DOI: 10.1364/AO.34.001352

## Description

### DOMAINE TECHNIQUE

La présente invention concerne un dispositif optique de projection, pour un des moyens d'affichage montés sur la tête d'un utilisateur et destinés à lui offrir une vision déportée. Il s'agit en particulier de déporter vers une large partie du champ de vision de l'utilisateur, une image provenant d'un écran miniature. De tels moyens d'affichage sont par exemple des lunettes ou un casque à réalité augmentée, permettant de superposer en transparence la projection d'une image provenant de l'écran miniature et l'image de l'environnement extérieur.

### ÉTAT DE LA TECHNIQUE ANTÉRIEURE

On connaît dans l'art antérieur de tels dispositifs optiques de projection dits catadioptriques, mettant en oeuvre des éléments réflectifs et réfractifs. Ces systèmes catadioptriques peuvent offrir un très large champ de vision, mais présentent un encombrement très important.

Afin de remédier à cet inconvénient, on connaît des dispositifs optiques de projection mettant en oeuvre un guide de lumière planaire.

Un guide de lumière planaire met en oeuvre un transport d'un faisceau lumineux par réflexions successives à l'intérieur du guide. Le guide de lumière permet de replier le trajet du faisceau lumineux à chaque réflexion interne. Le guide est dit planaire, car il présente deux faces principales opposées et parallèles entre elles. Il présente typiquement la forme parallélépipédique d'une plaque. En variante, les faces principales peuvent être incurvées, toujours parallèles entre elles. La hauteur de la plaque correspond sensiblement à la hauteur de l'écran miniature. La largeur de la plaque est sensiblement égale à la somme de la largeur de l'écran miniature et de la longueur de propagation souhaitée du faisceau lumineux provenant de l'écran miniature. Comme dans une fibre optique, les réflexions à l'intérieur du guide sont liées à une différence d'indice entre l'intérieur et l'extérieur du guide, et à une condition relative à l'angle d'incidence du faisceau, sur chaque interface entre l'intérieur et l'extérieur du guide.

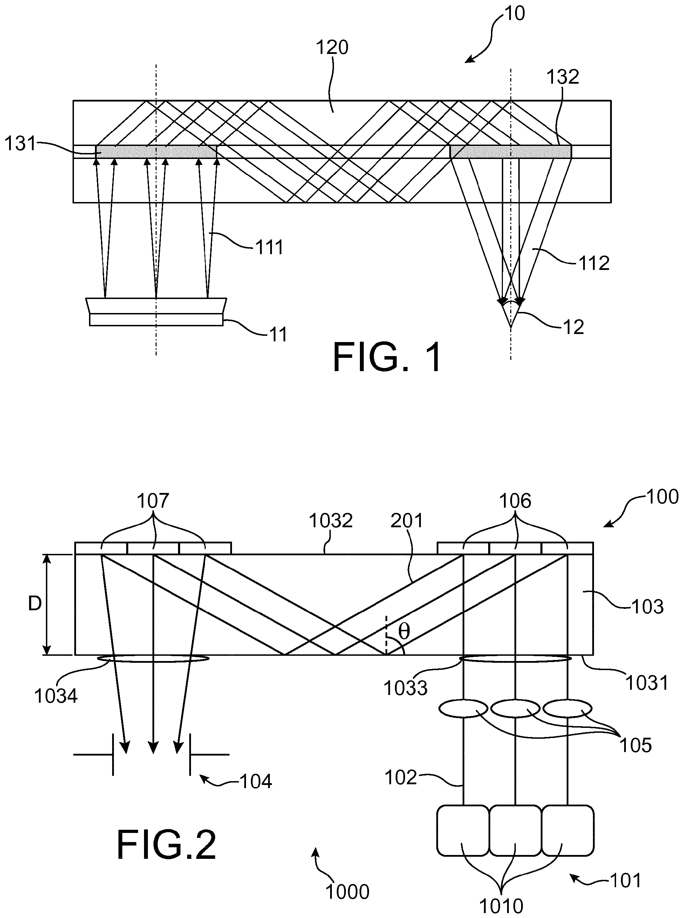

Un exemple d'un dispositif de projection au moyen d'un guide optique planaire a été décrit dans l'article de Y. Amitai et al. intitulé « Visor display design based on planar holographie optics », publié dans Applied Optics, Vol. 34, No. 8, pp. 1352-1356 et a été représenté schématiquement en figure 1. Ce dispositif de projection, 10, comprend ici une plaque holographique, 120, jouant le rôle de guide optique planaire. Un premier élément holographique, 131, intégré dans le guide, joue un rôle de collimation et de déviation des faisceaux incidents, 111. Les faisceaux ainsi collimatés et déviés sont guidés au moyen du guide optique planaire jusqu'à un second élément holographique, 132, également intégré dans le guide. Le second élément holographique diffracte les différents faisceaux vers l'oeil de l'observateur, 12. On remarque que le dispositif de projection présente des aberrations d'autant plus importantes que le champ de vision de l'observateur est étendu. En effet, les faisceaux 112 en bord du champ de vision correspondent à des faisceaux incidents 111 qui ne sont pas centrés sur l'axe optique A₁. Pour éviter ces aberrations, on prévoit par conséquent un champ d'observation réduit.

En augmentant l'indice optique du guide optique, on peut certes augmenter ce champ sans aggravation des aberrations, mais l'on dépasse difficilement un champ de 20°, correspondant à un indice élevé égal à 2.

La publication EP 2 808 725 A1 décrit un autre dispositif optique de projection particulièrement pertinent. Un objectif de la présente invention est de proposer un dispositif optique de projection pour des moyens d'affichage tels que des lunettes à réalité augmentée, qui offre à la fois un encombrement réduit et un large champ de vision en sortie, typiquement supérieur à 20°, atteignant par exemple 40° et même 60°.

### EXPOSÉ DE L'INVENTION

Cet objectif est atteint avec un dispositif optique de projection pour moyens d'affichage tels que des lunettes à réalité augmentée, comprenant un guide optique, le dispositif optique de projection comprenant :
- au moins deux optiques d'entrée réfractives, agencées devant une zone d'entrée du guide optique ;
- au moins deux éléments de collimation possédant une fonction de déviation, chaque élément de collimation étant associé à une optique d'entrée, et situé directement sur une face du guide optique ; et
- des moyens de conjugaison disposés entre les optiques d'entrée et les éléments de collimation, agencés pour conjuguer deux à deux une optique d'entrée et l'élément de collimation associé.

Les moyens de conjugaison et les éléments de collimation sont situés chacun directement sur une face du guide optique.

La zone d'entrée est par exemple située sur une première face du guide optique et les éléments de collimation, au moins partiellement réfléchissants sont alors situés sur une seconde face du guide de optique opposée à cette première face.

Les moyens de conjugaison comprennent avantageusement au moins deux éléments de conjugaison, chacun associé à une optique d'entrée et un élément de collimation.

L'élément de conjugaison est un élément choisi parmi un hologramme, un réseau de diffraction, un miroir ou une lentille de Fresnel, une lentille ou un miroir non plan.

De préférence, les moyens de conjugaison sont agencés pour dévier des faisceaux lumineux ayant traversé les optiques d'entrée, de façon à initier leur guidage dans le guide optique.

De même, les éléments de collimation sont agencés pour dévier hors du guide optique, des faisceaux lumineux ayant traversé les optiques d'entrée et les moyens de conjugaison, et s'étant propagés dans le guide optique.

Chaque élément de collimation est un élément choisi parmi un hologramme, un réseau de diffraction, un miroir ou une lentille de Fresnel, une lentille ou un miroir non plan.

Selon une variante, les moyens de conjugaison opèrent en transmission et sont situés entre les optiques d'entrée et une première face du guide optique, ou directement sur cette première face, ladite zone d'entrée étant située sur ladite première face.

Dans ce cas, les éléments de collimation sont par exemple situés directement sur une face du guide optique.

De même, les éléments de collimation sont agencés pour dévier les faisceaux lumineux ayant traversé les optiques d'entrée et les moyens de conjugaison, de façon à initier leur guidage dans le guide de lumière.

Les moyens de conjugaison peuvent comprendre au moins deux microlentilles, chacune associée à une optique d'entrée.

Alternativement, les moyens de conjugaison consistent en une unique lentille commune à chacune des optiques d'entrée.

Enfin le dispositif optique peut comprendre en outre des composants de découplage situés sur une face du guide optique et agencés pour dévier hors du guide optique, des faisceaux lumineux ayant traversé les optiques d'entrée, les moyens de conjugaison et les moyens de collimation, et s'étant propagés dans le guide optique.

L'invention concerne également un système optique de projection comprenant un dispositif optique de projection tel que défini ci-dessus, ainsi qu'un écran composé d'une pluralité d'écrans élémentaires, chaque écran élémentaire étant associé à une optique d'entrée et à l'élément de collimation correspondant, et chaque écran élémentaire étant agencé de sorte que :
- le guide optique réalise la propagation de faisceaux lumineux provenant de chacun des écrans élémentaires ; et
- chaque élément de collimation réalise la collimation d'un faisceau lumineux provenant d'un écran élémentaire, et ayant traversé l'optique d'entrée associée et les moyens de conjugaison.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
- la figure 1 illustre de manière schématique un système optique de projection selon l'art antérieur;
- la figure 2 illustre un premier mode de réalisation de dispositif et de système optique de projection selon l'invention ;
- les figures 3A et 3B illustrent de manière schématique des trajets de rayons lumineux dans une partie d'un système optique selon la figure 2 ;
- la figure 4 illustre de manière schématique la conjugaison pupillaire mise en oeuvre dans une partie d'un dispositif et un système optique selon la figure 2;
- la figure 5 illustre de manière schématique des trajets de rayons lumineux dans un dispositif et un système optique selon la figure 2 ;
- les figures 6A et 6B illustrent de manière schématique une répartition des projecteurs élémentaires selon l'invention ;
- la figure 7 illustre un deuxième mode de réalisation de dispositif et de système optique de projection selon l'invention ;
- les figures 8A à 8C illustrent de manière schématique des trajets de rayons lumineux dans un dispositif et un système optique selon la figure 7 ; et
- la figure 9 illustre une variante d'un dispositif et un système optique selon la figure 7.

### EXPOSÉ DÉTAILLÉ DE MODES DE RÉALISATION PARTICULIERS

On a illustré en figure 2 un premier mode de réalisation d'un dispositif 100 et un système optique de projection 1000 selon l'invention. Le dispositif optique de projection 100 est adapté à être intégré dans des moyens d'affichage tels que des lunettes à réalité augmentée. Il présente pour cela un encombrement réduit, typiquement inférieur à 100 cm³.

Le dispositif optique de projection 100 selon l'invention correspond à la fonction de projection seule. On définit également un système optique de projection 1000 selon l'invention, comprenant le dispositif optique de projection 100 ainsi qu'un écran 101 fournissant des données à projeter à l'aide du dispositif 100.

L'écran 101 comprend plusieurs écrans élémentaires 1010. Dans l'exemple représenté en figure 2, l'écran 101 consiste en trois écrans élémentaires 1010.

Les écrans élémentaires 1010 peuvent être des écrans indépendants disposés adjacents les uns aux autres ou bien espacés les uns des autres. On dispose ainsi facilement d'un nombre élevé de pixels, permettant ainsi que le système optique 1000 puisse offrir une définition confortable pour un oeil humain moyen (de l'ordre de 0,3 mrad/pixel).

En variante, les écrans élémentaires sont de simples zones définies sur l'écran 101. Par exemple, la surface de l'écran 101 est divisée en plusieurs zones formant chacune un écran élémentaire 1010.

L'écran 101 est typiquement un écran à haute définition. L'écran 101 fournit une image destinée à être projetée vers l'oeil d'un utilisateur. Il s'agit typiquement d'un écran à cristaux liquides (écran LCD), ou un écran à cristaux liquides sur silicone (LCOS), ou un écran à diodes électroluminescentes (LED), ou un écran à diodes électroluminescentes organiques (OLED), ou un écran à technologie dite DLP (pour l'anglais « *Digital Light Processing* »). La taille des pixels varie typiquement entre 1 µm et 10 µm, pour une largeur totale de l'écran de l'ordre de la dizaine de mm, par exemple 1.6" de diagonale.

Le dispositif optique 100 comprend un guide optique planaire 103. Ce guide présente une première zone dite zone d'entrée 1033, située sur une première face 1031, et une zone de sortie 1034. Dans le cas illustré, la zone de sortie est également située sur la première face 1031. Alternativement, elle pourrait être située sur une seconde face 1032, opposée à la première face. Les faces 1031 et 1032 sont parallèles entre elles (et de préférence planaires). Les faces 1031 et 1032 sont espacées l'une de l'autre d'une distance D dite épaisseur du guide de lumière (guide optique planaire), et typiquement comprise entre 10 µm et 10 mm. Le guide de lumière est par exemple en verre ou en polymère. Le guide de lumière 103 est agencé pour réaliser la propagation de faisceaux lumineux fournis par les écrans élémentaires 1010, vers un emplacement adapté à recevoir la pupille 104 de l'oeil d'un utilisateur.

Le dispositif optique 100 comprend également :
- plusieurs optiques d'entrée 105, situées à l'extérieur du guide de lumière et devant la zone d'entrée 1033 ;
- pour chaque optique d'entrée, un élément de collimation 107, collé sur le guide de lumière 103 et situé directement sur une face de celui-ci (ici la face 1032) ; et
- des moyens de conjugaison situés entre les optiques d'entrée 105 et les éléments de collimation 107. Les moyens de conjugaison consistent ici en plusieurs éléments de conjugaison 106, chacun associé à une optique d'entrée 105 et un élément de collimation 107.

Dans le système optique 1000 selon l'invention, chaque écran élémentaire 1010 est associé à :
- une optique d'entrée 105, située entre cet écran élémentaire 1010, et la zone d'entrée 1033 du guide de lumière ; et
- un moyen de conjugaison, 106 ;
- un élément de collimation, 107.

Les moyens de conjugaison réalisent la conjugaison deux à deux d'une optique d'entrée et de l'élément de collimation associé. Ils présentent donc une fonction de puissance optique.

Chaque ensemble comprenant une optique d'entrée 105 et l'élément de collimation 107 associé, définit un projecteur élémentaire selon l'invention. Un projecteur élémentaire comprend en outre l'élément de conjugaison 106 associé à cette même optique d'entrée (ou, le cas échéant, une portion d'une unique lentille formant les moyens de conjugaison, cette portion étant associée à cette même optique d'entrée).

L'optique d'entrée 105 forme la pupille d'entrée du projecteur élémentaire. L'élément de collimation 107 forme la pupille de sortie du projecteur élémentaire. On nomme donc « conjugaison pupillaire » la conjugaison réalisée entre les éléments 105 et 107 par l'intermédiaire des éléments 106.

Chaque écran élémentaire 1010 est associé à un projecteur élémentaire. Chaque ensemble comprenant un écran élémentaire et le projecteur élémentaire associé définit un système élémentaire selon l'invention.

Selon l'invention, la multiplication des projecteurs élémentaires permet de multiplier le champ de vision total en sortie du dispositif optique selon l'invention, tout en utilisant un unique guide de lumière. On peut utiliser des guides de lumière présentant un indice plus faible, et compenser la perte de champ théorique associée à cette baisse d'indice par l'utilisation de ces plusieurs projecteurs élémentaires.

L'intégrité du champ ainsi que la qualité de l'image vue par l'oeil, sont maintenues grâce à la conjugaison pupillaire entre chaque optique d'entrée et l'élément de collimation associé.

La résolution de l'image formée en sortie d'un projecteur élémentaire est liée au nombre de pixel sur chaque écran élémentaire correspondant. On obtient donc aisément une très bonne résolution, ce nombre de pixels n'étant pas un facteur limitatif.

Le dispositif optique réalisé est particulièrement compact, puisqu'il met en oeuvre un unique guide de lumière. En outre, au moins une partie des fonctions de puissance optique est intégrée sur ce guide de lumière ce qui permet de gagner encore en compacité. En particulier les éléments de collimation 107 sont intégrés sur le guide de lumière.

Selon le premier mode de réalisation de dispositif et de système tel qu'illustré en figure 2, chaque projecteur élémentaire correspond à une portion du champ total en sortie du dispositif selon l'invention. A chaque projecteur élémentaire est associé un champ élémentaire de X^{∘}, limité par le guide de lumière, typiquement inférieur à 20°. Ainsi, le champ total offert à l'oeil, en sortie du dispositif, selon l'invention est de N*X^{∘}, avec N le nombre de projecteurs élémentaires, N supérieur ou égal à 2. L'invention permet d'obtenir aisément un champ total d'au moins 40°, par exemple 60° ou plus, en sortie du dispositif selon l'invention. On peut nommer « canal » le chemin optique associé à un champ élémentaire. Dans l'exemple représenté en figure 2, chaque projecteur élémentaire est associé à un canal.

Chaque optique d'entrée 105 est formée par une lentille, typiquement en verre ou en polymère, taillée ou moulée. Sa focale est par exemple de l'ordre de 25 mm, et son diamètre d'environ 4 mm. Chaque optique d'entrée 105 présente une fonction de puissance optique, et participe ainsi à la combinaison optique de projection d'un écran élémentaire 101 vers la pupille de l'oeil.

Dans l'exemple représenté en figure 2, les éléments de conjugaison 106 se trouvent sur la seconde face 1032 du guide de lumière, opposée à la première face 1031. En particulier, les éléments de conjugaison 106 se trouvent en face des optiques d'entrée, de sorte que le faisceau lumineux 102 provenant d'un écran élémentaire et incident sur l'élément de conjugaison 106 correspondant, a traversé uniquement une optique d'entrée, puis s'est propagé de la face 1031 vers la face 1032 du guide optique.

Les éléments de conjugaison 106 travaillent en réflexion, notamment une réflexion totale.

Chaque élément de conjugaison 106 est agencé pour dévier un faisceau lumineux 102 ayant traversé l'optique d'entrée 105 associée. Ce faisceau provient de l'écran élémentaire 1010 correspondant.

Chaque élément de conjugaison 106 présente donc une fonction de déviation, en complément de sa fonction de puissance optique. Ladite déviation permet d'incliner selon un angle souhaité, le faisceau lumineux 102 incident sur l'élément de conjugaison 106. En particulier, cette déviation incline le faisceau lumineux 102 de sorte que le faisceau résultant se réfléchisse entièrement à l'intérieur du guide de lumière. Les conditions pour une telle réflexion interne sont déterminées par les lois de Snell-Descartes. On initie ainsi le guidage du faisceau lumineux 102 à l'intérieur du guide optique 103, par réflexions successives entre les faces 1031 et 1032.

Les éléments de conjugaison 106 réalisent avantageusement tous la même déviation.

Selon une variante non représentée, un composant distinct des moyens de conjugaison réalise la fonction de déviation. Ce composant distinct peut être superposé aux moyens de conjugaison, ou disjoint de sorte que ce composant et les moyens de conjugaison soient situés en des emplacements différents sur le guide de lumière. Ce composant distinct est toujours avantageusement situé sur la face 1032 du guide de lumière, en face des optiques d'entrée.

Chaque élément de conjugaison 106 présente typiquement une focale d'environ 10 mm, et un diamètre d'environ 10 mm.

Chaque élément de conjugaison 106 consiste par exemple en un hologramme formé dans le guide de lumière ou collé sur la face 1032. Un tel hologramme est également nommé lentille holographique. Il s'agit d'une lentille dans laquelle on utilise les techniques holographiques d'impression de franges d'interférence, pour obtenir les propriétés de diffraction souhaitées. Un avantage d'une telle lentille est qu'elle présente une épaisseur réduite. Selon le mode de réalisation de la figure 2, l'hologramme travaille en réflexion au moins partielle.

Chaque élément de conjugaison 106 peut également consister en un réseau de diffraction en réflexion (en particulier un réseau de diffraction blazé à pas variable), un miroir de Fresnel (miroir basé sur le principe de la lentille de Fresnel), ou un miroir sphérique ou asphérique (obtenu typiquement par moulage ou embossage). Un avantage de recourir à un miroir de Fresnel ou tout autre miroir non plan est que l'on peut plus facilement propager dans le guide de lumière des faisceaux lumineux 102 polychromatiques.

Selon une variante non représentée, les éléments de conjugaison 106 se situent sur la face 1031 et travaillent en transmission. Ils consistent alors en des éléments tels qu'un réseau de diffraction en transmission, une lentille (hors axe), une lentille de Fresnel (hors axe) ou encore un hologramme travaillant en transmission.

Chaque élément de collimation 107 reçoit un faisceau lumineux ayant traversé l'optique d'entrée 105 associée. Selon le mode de réalisation représenté en figure 2, le faisceau lumineux reçu par un élément de collimation 107 s'est propagé dans le guide de lumière 103.

Chaque élément de collimation reçoit ledit faisceau lumineux, et fournit en sortie un faisceau collimaté, c'est-à-dire tel que les rayons lumineux formant le « faisceau de champ » sont parallèles entre eux. Chaque élément de collimation 107 présente donc une fonction de puissance optique.

Selon le mode de réalisation de la figure 2, les éléments de collimation 107 se trouvent en face d'un emplacement prévu pour l'oeil d'un utilisateur. On limite ainsi une distance séparant l'oeil et la dernière surface du dispositif selon l'invention qui présente une fonction de puissance optique (on parle en anglais de la distance d' « eye-relief »). Or, le nombre d'ouverture associé à un dispositif optique est égal au rapport de la focale sur le diamètre de la pupille de ce dispositif optique. On peut montrer qu'en diminuant la distance d'eye-relief, on diminue ce diamètre de pupille et on augmente ainsi le nombre d'ouverture. Ainsi, chaque projecteur élémentaire tel qu'illustré en figure 2 présente un nombre d'ouverture élevé, ce qui correspond à une moindre complexité.

Dans l'exemple représenté en figure 2, les éléments de collimation 107 se trouvent sur la deuxième face 1032 du guide de lumière, opposée à la première face 1031. Ils travaillent en réflexion. Il s'agit ici d'une réflexion au moins partielle, en intensité ou en longueur d'onde, en particulier dans le cas où le dispositif 100 selon l'invention appartient à des lunettes ou un casque à réalité augmentée. Ainsi, les éléments de collimation 107 permettent de réfléchir au moins une partie (par exemple au moins la moitié) de l'intensité lumineuse émise par un écran élémentaire, sans pour autant bloquer des rayons provenant du côté du guide de lumière opposé à l'écran. Ils assurent ainsi la superposition d'une image provenant de l'écran et d'une image de l'environnement extérieur.

Chacun des éléments de collimation 107 est ici agencé pour dévier un faisceau lumineux 102 ayant traversé l'optique d'entrée 105 correspondante et les moyens de conjugaison, et s'étant propagé dans le guide de lumière 103. Ce faisceau provient de l'écran élémentaire 1010 correspondant. Chaque élément de collimation 107 présente alors une fonction de déviation, en complément de sa fonction de puissance optique. Ladite déviation permet d'incliner selon un angle souhaité, le faisceau lumineux 102 s'étant propagé dans le guide optique. En particulier, cette déviation incline le faisceau lumineux 102 de sorte que le faisceau résultant traverse la face 1031 et émerge hors du guide de lumière. Là encore, les conditions pour une telle sortie hors du guide sont déterminées par les lois de Snell-Descartes. On initie ainsi la sortie du faisceau lumineux 102 hors du guide de lumière 103. Chaque faisceau est dévié typiquement d'un angle compris entre 30° et 60° relativement à son incidence en l'absence de déviation, par exemple 60°.

Les éléments de collimation 107 dévient les faisceaux ayant traversé les optiques d'entrée, de sorte que ces différents faisceaux se dirigent tous vers un emplacement prévu pour l'oeil d'un utilisateur. En particulier, ces différents faisceaux traversent une surface située hors du guide de lumière, correspondant à la surface de la pupille 104 de l'oeil d'un utilisateur. Cette surface est un disque présentant une aire de l'ordre du cm² (par exemple un disque de diamètre 5 mm). Les faisceaux proviennent des différents écrans élémentaires.

Selon une variante non représentée, un composant distinct de l'élément de collimation 107 réalise la fonction de déviation. Ce composant distinct peut être superposé à l'élément de collimation, ou disjoint de sorte que ce composant et les éléments de collimation soient situés en des emplacements différents sur le guide de lumière. Ce composant distinct est toujours avantageusement situé sur la face 1032 du guide de lumière, en face de l'emplacement prévu pour la pupille de l'oeil.

Les éléments de collimation sont de préférence jointifs.

Chaque élément de collimation 107 présente typiquement une focale de 15 mm environ, et un diamètre d'environ 10 mm.

Chaque élément de collimation 107 consiste par exemple en un hologramme formé dans le guide de lumière ou collé sur la face 1032. Selon le mode de réalisation de la figure 2, l'hologramme travaille en réflexion au moins partielle. Un tel hologramme offre typiquement une efficacité supérieure à 80 % à sa longueur d'onde de travail (et sur une largeur spectrale d'environ 15 nm autour de cette longueur d'onde).

Chaque élément de collimation 107 peut également consister en un réseau de diffraction en réflexion, notamment un réseau de diffraction blazé à pas variable, un miroir de Fresnel, ou un miroir sphérique ou asphérique obtenu typiquement par moulage ou embossage.

Selon une variante non représentée, les éléments de collimation 107 se situent sur la face 1031 et travaillent en transmission. Ils consistent alors en des éléments tels qu'un réseau de diffraction en transmission, une lentille (hors axe), une lentille de Fresnel (hors axe), ou encore un hologramme travaillant en transmission. Les éléments de collimation 107 et les éléments de conjugaison 106 ne se trouvent pas nécessairement sur la même face 1031 ou 1032 du guide optique.

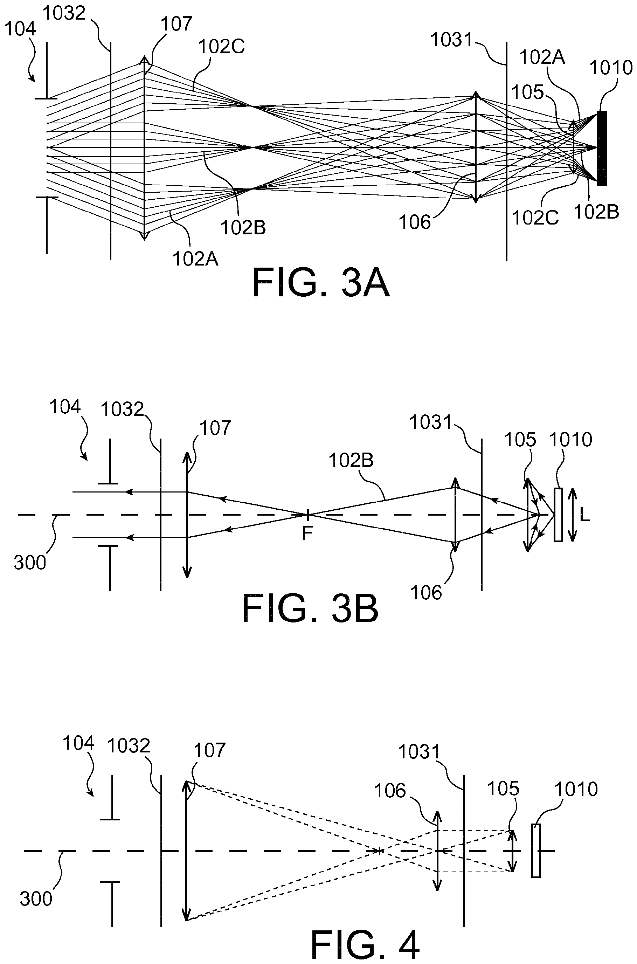

Les figures 3A et 3B illustrent de manière schématique des trajets de rayons lumineux dans une partie d'un dispositif optique tel que représenté en figure 2. Les figures 3A et 3B représentent un unique projecteur élémentaire et système élémentaire.

Sur les figures 3A et 3B, on a déplié le chemin optique parcouru par les faisceaux lumineux à l'intérieur du guide de lumière.

On a représenté une face 1031 correspondant à la traversée de la face 1031 du guide optique (par souci de simplification l'indice optique du guide de lumière a été pris ici égal à 1) par des faisceaux lumineux provenant de l'écran, et une face 1032 correspondant à la traversée de la face du guide de lumière lorsque le faisceau lumineux sort hors du guide de lumière pour se propager vers l'oeil d'un utilisateur.

On a représenté en figure 3A trois faisceaux lumineux 102A, 102B, 102C provenant respectivement du bord supérieur, du centre et du bord inférieur de l'écran élémentaire 1010.

La figure 3B illustre en détail les différentes conjugaisons mises en oeuvre dans un système élémentaire selon l'invention.

L'axe optique 300 est représenté en pointillés. L'écran élémentaire 1010 est imagé ici par l'optique d'entrée 105 en une image intermédiaire virtuelle, située du même côté de l'optique d'entrée 105 que l'écran élémentaire 1010. Cette image virtuelle est ensuite conjuguée par l'élément de conjugaison 106, au foyer F de l'élément de collimation 107. L'élément de collimation 107 fournit alors un faisceau collimaté passant par la pupille de l'oeil 104. Sur la figure 3B, la différence entre l'angle d'incidence du faisceau 102B sur l'optique d'entrée 105, et l'angle d'incidence de ce même faisceau sur l'élément de conjugaison 106 et après avoir traversé l'optique d'entrée 105, est fortement exagéré pour des raisons de clarté.

L'homme du métier saura aisément déterminer des matériaux et dimensions particuliers pour chacun des éléments du dispositif optique et du système optique selon l'invention. Il pourra par exemple fixer certains paramètres, puis en déduire l'ensemble des autres paramètres permettant de réaliser l'invention. Les paramètres à fixer sont par exemple la taille et l'emplacement prévu pour la pupille de l'oeil, l'indice du guide de lumière, le nombre d'ouverture souhaité du dispositif optique selon l'invention, le positionnement des optiques d'entrée et des éléments de collimation sur le guide de lumière (par exemple sur la face 1032, espacés d'une distance prédéterminée) ainsi que leurs puissances.

On peut ensuite utiliser les relations suivantes :
- la distance entre l'emplacement prévu pour la pupille de l'oeil et les éléments de collimation 107 correspond à la distance d'eye-relief;
- le diamètre d'un élément de collimation 107 se calcule à partir de la distance d'eye-relief, la taille de la pupille de l'oeil, et du champ associé à un projecteur élémentaire ;
- la distance entre l'élément de conjugaison 106 et l'élément de collimation 107, lorsqu'ils présentent chacun une fonction de déviation, est liée à l'épaisseur du guide et au nombre de réflexions internes à l'intérieur de ce guide ;
- la focale de l'élément de collimation 107 peut être réglée par son diamètre (calculé précédemment) et par son nombre d'ouverture (qui est fonction de sa nature : hologramme, réseau ou optique de Fresnel, etc.) ;
- la focale des éléments de conjugaison 106 est définie en fixant la distance entre les éléments de collimation et les optiques d'entrée ;
- la position et la focale de l'optique d'entrée sont déterminées par la taille de l'écran élémentaire et en considérant les nombres d'ouvertures des optiques d'entrée et des éléments de conjugaison.

Par exemple, à partir de la taille de la pupille de l'oeil et d'un nombre d'ouverture déterminé d'un projecteur élémentaire, on définit la valeur de la focale de l'élément de collimation.

A partir de positions prédéterminées de l'élément de conjugaison 106 et de l'optique d'entrée 105, on définit la focale de l'élément de conjugaison 106 telle que l'élément de collimation soit le conjugué de l'optique d'entrée 105 par l'élément de conjugaison 106.

A partir de la taille de la pupille de l'oeil et de la focale de l'élément de collimation 107, on détermine la taille de l'image intermédiaire formée dans le plan focal objet de l'élément de collimation 107. On en déduit, à partir de la focale de l'élément de conjugaison 106, la taille de l'image intermédiaire virtuelle formée entre l'optique d'entrée 105 et l'écran élémentaire 1010. Ensuite, la taille de l'écran élémentaire 1010 étant connue, on en déduit la focale de l'optique d'entrée 105.

Selon un exemple particulier (on a encore supposé ici que l'indice optique du guide optique était égal à 1) :
- l'écran élémentaire 1010 présente une largeur L de 5 mm ;
- la distance entre l'axe optique d'une optique d'entrée 105 et l'axe optique de l'élément de collimation 107 associé est d'environ 50 mm.
- l'optique d'entrée présente une focale de 24,72 mm et un diamètre de 3,92 mm ;
- le guide de lumière présente un indice de 1,887 à 450 nm, et une épaisseur de 5 mm ;
- l'élément de conjugaison 106 présente une focale de 8,86 mm et un diamètre de 11,4 mm ;
- l'élément de collimation 107 présente une focale de 15,14 mm et un diamètre de 9,46 mm ;
- le projecteur élémentaire présente un nombre d'ouverture de 1,6 ; et
- la pupille 104 de l'oeil est un disque de diamètre 5 mm se trouvant à 10 mm de la face 1031.

La figure 4 illustre de manière schématique la conjugaison pupillaire mise en oeuvre dans un projecteur élémentaire tel que défini précédemment.

La pupille d'entrée du projecteur élémentaire est formée par l'optique d'entrée 105. La pupille de sortie du projecteur élémentaire est formée par l'élément de collimation 107. La pupille de sortie est le conjugué de la pupille d'entrée par l'élément de conjugaison 106. En d'autres termes, soit l'optique d'entrée 105 formant un objet, l'emplacement et la taille de l'image de cet objet coïncide avec l'emplacement et la taille de l'élément de collimation 107.

Cette relation de conjugaison permet de s'affranchir de tout phénomène de diaphotie (en anglais, « crosstalk ») entre les projecteurs et systèmes élémentaires. Si un rayon lumineux traverse une optique d'entrée 105, puis arrive sur un élément de conjugaison 106 associé à un projecteur élémentaire voisin, la relation de conjugaison définie ci-dessus permet de renvoyer ce rayon hors de l'emplacement destiné à recevoir la pupille de l'oeil. Ledit rayon provient de l'écran élémentaire associé à ladite optique d'entrée 105.

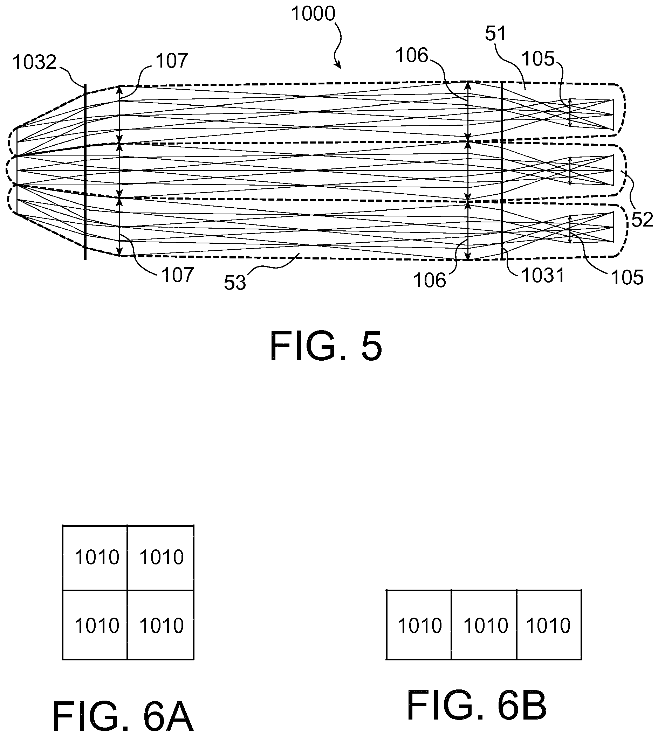

La figure 5 illustre de manière schématique des trajets de rayons lumineux dans un dispositif et système optique tel que représenté en figure 2. La figure 5 correspond à la figure 3A, mais illustre les trois systèmes élémentaires 51, 52, 53 du système optique 1000 illustré en figure 2. La figure 5 illustre également les trois projecteurs élémentaires, tels qu'un projecteur élémentaire et un écran élémentaire forment ensemble un système élémentaire.

Les figures 6A et 6B illustrent de manière schématique une répartition des projecteurs et systèmes élémentaires selon l'invention. On voit que les projecteurs et systèmes élémentaires peuvent être juxtaposés selon deux dimensions de l'espace (figure 6A) ou selon une seule dimension (figure 6B et figures 2 et 5).

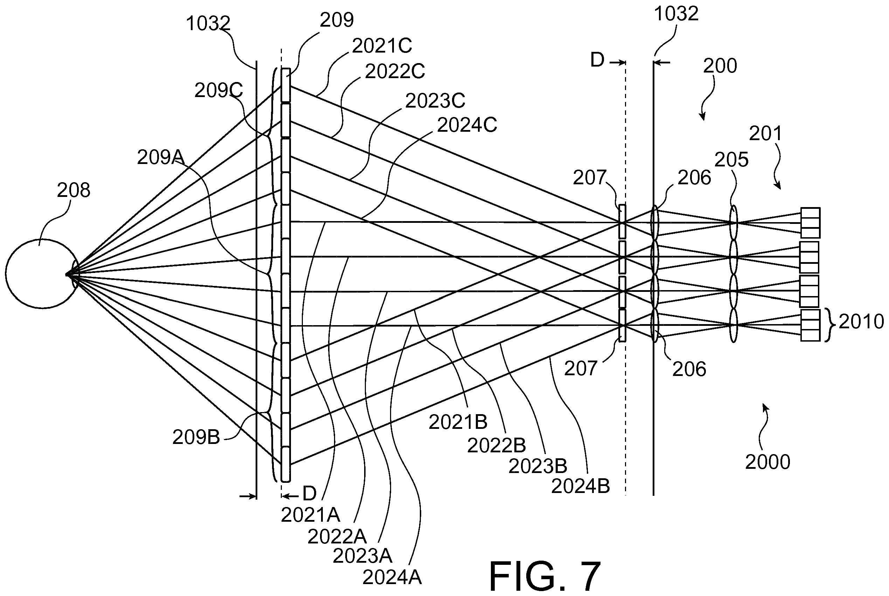

La figure 7 illustre un deuxième mode de réalisation de dispositif optique 200 et de système optique 2000 selon l'invention.

Le dispositif optique 200 est représenté selon une vue dépliée, c'est-à-dire que les réflexions internes dans le guide de lumière sont dépliées pour représenter des faisceaux lumineux s'étendant selon en lignes droites.

Comme dans le premier mode de réalisation, l'écran 201 consiste en plusieurs écrans élémentaires 2010.

Le dispositif optique 200 comprend un guide de lumière d'épaisseur D, similaire à celui décrit précédemment à propos du mode de réalisation de la figure 2. La vue de la figure 7 étant une vue dépliée, on a représenté en particulier la face d'entrée et sortie 1031 telle que traversée la première fois par les faisceaux lumineux provenant de l'écran, et la face opposée 1032 telle que traversée une dernière fois par les faisceaux lumineux provenant de l'écran.

Le dispositif optique 200 comprend des optiques d'entrée 205, similaires à celles décrites à propos du premier mode de réalisation de l'invention.

Il comprend également des moyens de conjugaison, formés par plusieurs éléments de conjugaison 206. Les éléments de conjugaison 206 peuvent être situés entre les optiques d'entrée 205, et la face 1031 du guide de lumière, par exemple directement adjacents à cette face, accolés à celle-ci. En variante, les éléments de conjugaison 206 peuvent être formés d'un seul tenant avec le guide de lumière, et plaqués sur cette face.

Les éléments de conjugaison 206 selon le deuxième mode de réalisation de l'invention diffèrent des éléments de conjugaison 106 selon le premier mode de réalisation de l'invention, en ce qu'ils consistent cette fois en des microlentilles. En outre, ils travaillent cette fois en transmission.

Le dispositif optique 200 comprend ensuite des éléments de collimation 207, formés ou collés directement sur une face du guide de lumière. Ils peuvent en particulier être formés ou collés sur la face 1032 du guide de lumière, chaque élément de collimation 207 faisant face à un écran élémentaire 2010.

Les éléments de collimation présentent avantageusement une fonction de déviation, en plus de leurfonction de puissance optique. Il s'agit d'initier le guidage dans le guide de lumière des faisceaux lumineux provenant des écrans élémentaires et ayant traversé les optiques d'entrée et les moyens de conjugaison. Une telle déviation est décrite ci-avant, à propos de la figure 2 et des moyens de conjugaison 106. En variante, des composants distincts réalisent cette fonction de déviation.

Les optiques d'entrée 205, éléments de conjugaison 206 et éléments de collimation 207 selon le deuxième mode de réalisation de l'invention entretiennent entre eux les mêmes relations de conjugaison que les optiques d'entrée 105, éléments de conjugaison 106 et éléments de collimation 107 selon le premier mode de réalisation de l'invention. A cet égard, on pourra se référer aux figures 3A, 3B, 4, et 5, aux différences près que les faces 1031 et 1032 représentées sur ces figures doivent être déplacées pour être placées comme en figure 7.

Comme dans le premier mode de réalisation, ce deuxième mode de réalisation met en oeuvre plusieurs projecteurs élémentaires se partageant un même guide de lumière et mettant chacun en oeuvre une conjugaison de pupille évitant des phénomènes de diaphotie.

A chaque projecteur élémentaire correspond un écran élémentaire, l'ensemble formant un système élémentaire.

Chaque projecteur élémentaire propage une petite portion d'un champ total. Selon le deuxième mode de réalisation tel qu'illustré en figure 7, la répartition du champ est la suivante : le guide de lumière est associé à un champ limite de X°, par exemple 20°. Ces X° définissent un champ élémentaire.

On souhaite par exemple un champ total de N*X^{∘}, par exemple 40° ou 60° ou plus. Sur la figure 7, on a N=3. On pose un nombre M de projecteurs et systèmes élémentaires. Sur la figure 7, on a M=4.

Sur chaque écran élémentaire, on définit N zones, soit ici 3 zones. En particulier, chaque zone correspond à un pixel de l'écran élémentaire. Ici, chaque écran élémentaire comprend donc trois pixels. Les écrans élémentaires comprennent chacun un même nombre de pixels.

On peut nommer « canal » le chemin optique associé à un champ élémentaire. Chaque canal regroupe des faisceaux lumineux provenant de chacun des écrans élémentaires. En particulier, chaque canal regroupe des faisceaux lumineux provenant du même pixel respectif sur chacun des écrans élémentaires. Sur la figure 7, un canal correspond aux faisceaux lumineux provenant des pixels supérieurs des écrans élémentaires, un canal correspond aux faisceaux lumineux provenant des pixels centraux des écrans élémentaires, et un canal correspond aux faisceaux lumineux provenant des pixels inférieurs des écrans élémentaires. La résolution en pixels pour chaque canal est donc déterminée par le nombre de projecteurs élémentaires. Sur la figure 7, on compte M=4 projecteurs élémentaires, de sorte que la résolution de l'image en sortie du dispositif optique 200 selon l'invention est de M=4 pixels par canal, soit M=4 pixels par X=20° de champ.

Dans chaque projecteur élémentaire, après avoir traversé l'élément de collimation 207, les faisceaux lumineux associés à chacun des trois pixels s'écartent spatialement les uns des autres. Les faisceaux lumineux 2021A, 2022A, 2023A, 2024A associés aux pixels centraux respectifs des écrans élémentaires se propagent alors parallèlement les uns par rapport aux autres. Les faisceaux lumineux 2021B, 2022B, 2023B, 2024B associés aux pixels inférieurs respectifs des écrans élémentaires se propagent alors parallèlement les uns par rapport aux autres. Les faisceaux lumineux 2021C, 2022C, 2023C, 2024C associés aux pixels supérieurs respectifs des écrans élémentaires se propagent alors parallèlement les uns par rapport aux autres.

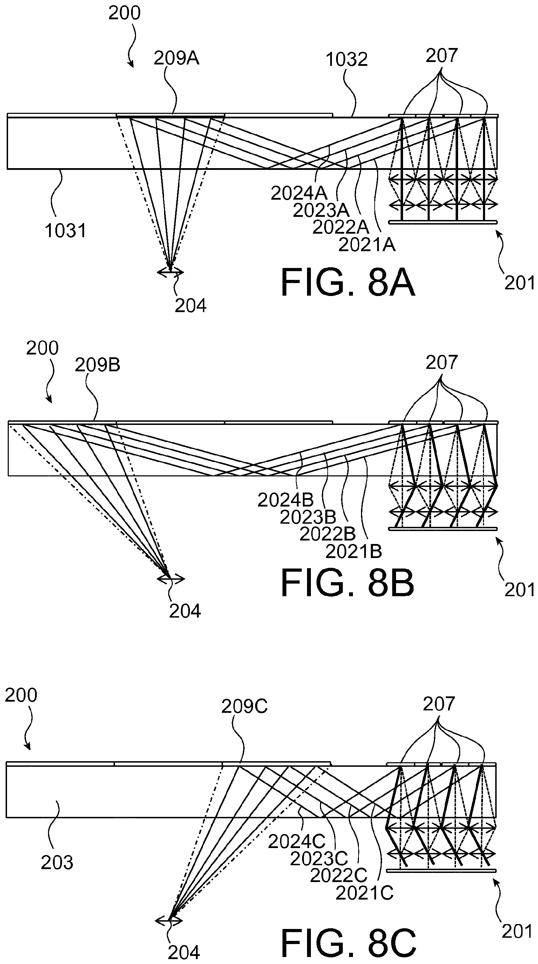

Les figures 8A à 8C illustrent le dispositif et le système optique selon une vue non dépliée.

Sur la figure 8A, on a représenté plus particulièrement les faisceaux lumineux 2021A, 2022A, 2023A et 2024A, formant ensemble un canal central correspondant à une portion centrale du champ total en sortie du dispositif optique 200 selon l'invention. L'oeil est modélisé par une lentille 204. Chacun de ces faisceaux atteint un composant de découplage appartenant à un ensemble central 209A de composants de découplage 209 (voir également figure 7). Chaque composant de découplage présente une fonction de déviation, et est agencé pour dévier le faisceau lumineux qu'il reçoit, de façon à ce qu'il sorte du guide de lumière pour atteindre l'emplacement adapté à recevoir l'oeil de l'utilisateur. Les composants de découplage ne présentent aucune fonction de puissance, et sont donc faciles à réaliser. Ils peuvent consister en un élément parmi un hologramme, un réseau de diffraction, ou un miroir plan semi-transparent. Les composants de découplage sont situés sur une face du guide de lumière, ici la face 1032, en face d'un emplacement prévu pour la pupille de l'oeil.

Sur la figure 8B, on a représenté plus particulièrement les faisceaux lumineux 2021B, 2022B, 2023B et 2024B, formant ensemble un canal latéral gauche correspondant à une portion latérale gauche du champ total en sortie du dispositif optique 200 selon l'invention. Chacun de ces faisceaux atteint un composant de découplage appartenant à un ensemble latéral gauche 209B de composants de découplage.

Sur la figure 8C, on a représenté plus particulièrement les faisceaux lumineux 2021C, 2022C, 2023C et 2024C, formant ensemble un canal latéral droit correspondant à une portion latérale droite du champ total en sortie du dispositif optique 200 selon l'invention. Chacun de ces faisceaux atteint un composant de découplage appartenant à un ensemble latéral droit 209C de composants de découplage.

Ainsi, chaque composant de découplage 209 est associé à un pixel d'un écran élémentaire, et à chaque écran élémentaire correspondent autant de composants de découplage 209 qu'il y a de pixels. Chaque composant de découplage est agencé pour dévier hors du guide de lumière un faisceau lumineux provenant des écrans élémentaires, ayant traversé les optiques d'entrée, les moyens de conjugaison et les moyens de collimation, et s'étant propagé dans le guide de lumière.

Chaque pixel d'un écran élémentaire est associé à un unique composant de découplage, présentant une fonction de déviation distincte des fonctions de déviation des autres composants de découplage.

Chaque ensemble 209A, 209B, respectivement 209C de composants de découplage regroupe des composants de découplage associés à chacun des écrans élémentaires. Les ensembles 209A, 209B, 209C ne partagent pas de composants de découplage en commun. Dans chaque ensemble, il n'y a qu'un unique composant de découplage associé à un écran élémentaire donné.

Les ensembles 209A, 209B, 209C sont juxtaposés les uns aux autres, agencés jointifs. Chaque ensemble 209A, 209B, ou 209C regroupe des composants de découplage jointifs.

Si l'on définit un composant de découplage par l'optique d'entrée à laquelle il est associé, les ensembles 209A, 209B, 209C présentent tous la même répartition des composants de découplage.

De préférence, lors de leur injection dans le guide de lumière, les faisceaux lumineux associés à chacun des pixels sont déviés de façon à atteindre le composant de découplage adapté.

On remarque que la répartition spatiale des pixels sur l'écran 201 ne coïncide pas avec la répartition spatiale des faisceaux lumineux associés à chacun de ces pixels, au niveau de l'emplacement prévu pour la pupille de l'oeil. L'image formée sur l'écran 201 ne correspond donc pas à l'image qui sera vue par un utilisateur. L'image formée sur l'écran 201 doit donc être adaptée au système optique 200 selon l'invention, en fonction de l'image que l'on souhaite projeter en sortie de ce système. En outre, cela implique une fonction de découplage complexe mise en oeuvre par les ensembles d'éléments de déviation.

Selon le deuxième mode de réalisation, les moyens de conjugaison peuvent être formés par des microlentilles. L'utilisation de microlentilles donne accès à des valeurs de distance focale très faibles, par exemple inférieures à 8 mm, même inférieures à 5 mm. On peut ainsi utiliser des écrans élémentaires 2010 de dimensions réduites, sans que cela nuise à l'ouverture numérique des projecteurs élémentaires. On peut en effet montrer que la distance focale d'un projecteur élémentaire diminue lorsque la taille de l'écran élémentaire diminue, mais que cette diminution peut être compensée par une diminution des diamètres des éléments participant à la combinaison.

Grâce à l'utilisation de microlentilles pour former les moyens de conjugaison, on peut donc miniaturiser encore le dispositif et le système optique selon l'invention. On peut notamment diminuer l'encombrement des écrans élémentaires en diminuant le champ ou la résolution.

Par exemple, les éléments de conjugaison présentent une focale inférieure à 1 mm, par exemple inférieure à 100 µm, pour un diamètre inférieur à 1 mm, par exemple inférieur à 100 µm. Les écrans élémentaires peuvent ainsi présenter des pixels de dimension inférieure à 1 µm, pour une taille totale inférieure à 5 mm de côté.

Les éléments de collimation 207 peuvent être entièrement réfléchissants, même pour une utilisation dans un dispositif de vision à réalité augmentée, car ils ne se trouvent pas forcément en face de l'emplacement prévu pour la pupille de l'oeil 208. Le fait qu'un élément de collimation 207 ne se trouve pas en face de l'emplacement prévu pour la pupille de l'oeil 208 augmente la distance dite d'eye-relief du dispositif optique selon l'invention. Cela diminue légèrement l'ouverture numérique de ce dispositif optique de projection, mais les canaux optiques sont plus petits et donc plus nombreux que pour le premier mode de réalisation ; les portions de champs traités par chaque canal sont ainsi plus petites ce qui rend l'ensemble beaucoup moins sensible à l'impact de la distance d'oeil sur le nombre d'ouverture.

Selon le mode de réalisation de la figure 7, les écrans élémentaires sont avantageusement formés par des zones d'un même écran. Cependant, de nombreux pixels de l'écran ne peuvent alors être imagés. En d'autres termes, les zones correspondantes à des écrans élémentaires ne sont pas jointives. En effet, la largeur des éléments de conjugaison 206 est bien supérieure à la largeur des optiques d'entrée 205, ce qui forme des zones aveugles entre deux optiques d'entrée 205.

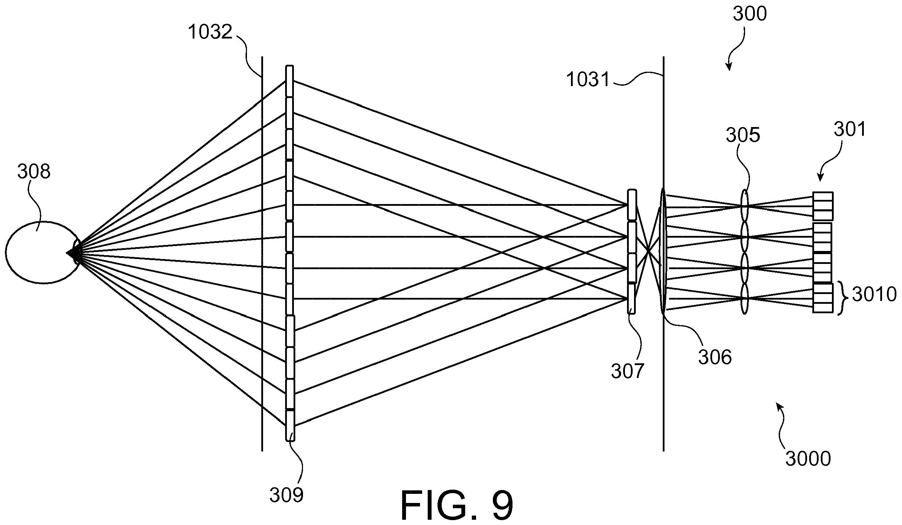

La figure 9 présente une variante du mode de réalisation de la figure 7, permettant de pallier cet inconvénient. Les références numériques de la figure 9 correspondent à celles de la figure 7, en remplaçant le premier chiffre de chaque nombre par un trois. Selon la variante représentée en figure 9, on remplace les plusieurs éléments de conjugaison 206 distincts par une unique lentille 306 ce qui permet de disposer les optiques d'entrée jointives et ainsi de limiter la perte de pixels. Pour un même encombrement, on peut en outre avoir plus de projecteurs élémentaires. Ainsi, à encombrement égal, la résolution associée à chaque canal peut être améliorée. La fonction de déviation réalisant l'injection des faisceaux lumineux dans le guide de lumière est cependant complexifiée.

## Revendications

1. Dispositif optique de projection (100 ; 200 ; 300) pour des moyens d'affichage tels que des lunettes à réalité augmentée, comprenant un guide optique (103 ; 203), **caractérisé en ce que** le dispositif optique de projection (100 ; 200 ; 300) présente :
- au moins deux optiques réfractives d'entrée (105 ; 205 ; 305), nommées optiques d'entrée, agencées devant une zone d'entrée (1033), laquelle est située sur une face (1031) du guide optique (103 ; 203) ;
- au moins deux éléments de collimation (107; 207; 307) possédant une fonction de déviation, chaque élément de collimation étant associé à une optique d'entrée (105 ; 205 ; 305), et situé directement sur une face (1031 ; 1032) du guide optique ; et
- des moyens de conjugaison (106 ; 206 ; 306) disposés entre les optiques d'entrée (105 ; 205 ; 305) et les éléments de collimation (107 ; 207 ; 307), agencés pour conjuguer deux à deux une optique d'entrée (105 ; 205 ; 305) et l'élément de collimation (107 ; 207 ; 307) associé.

2. Dispositif optique (100) selon la revendication 1, **caractérisé en ce que** les moyens de conjugaison (106) et les éléments de collimation (107) sont situés chacun directement sur une face (1031 ; 1032) du guide optique (103).

3. Dispositif optique (100) selon la revendication 2, **caractérisé en ce que** la zone d'entrée est située sur une première face du guide optique et que les éléments de collimation (107) sont au moins partiellement réfléchissants et situés sur une seconde face (1032) du guide de optique opposée à cette première face.

4. Dispositif optique (100) selon la revendication 2 ou 3, **caractérisé en ce que** les moyens de conjugaison (106) comprennent au moins deux éléments de conjugaison, chacun associé à une optique d'entrée (105) et un élément de collimation (107).

5. Dispositif optique (100) selon la revendication 4, **caractérisé en ce que** chaque élément de conjugaison (106) comprend un élément parmi un hologramme, un réseau de diffraction, un miroir ou une lentille de Fresnel, une lentille ou un miroir non plan.

6. Dispositif optique (100) selon l'une quelconque des revendications 2 à 5, **caractérisé en ce que** les moyens de conjugaison (106) sont agencés pour dévier des faisceaux lumineux ayant traversé les optiques d'entrée, de façon à initier leur guidage dans le guide optique (103).

7. Dispositif optique (100) selon l'une quelconque des revendications 2 à 6, **caractérisé en ce que** les éléments de collimation (107) sont agencés pour dévier hors du guide optique (103), des faisceaux lumineux ayant traversé les optiques d'entrée et les moyens de conjugaison, et s'étant propagés dans le guide optique.

8. Dispositif optique (100) selon l'une quelconque des revendications 2 à 7, **caractérisé en ce que** chaque élément de collimation (107) comprend un élément parmi un hologramme, un réseau de diffraction, un miroir ou une lentille de Fresnel, une lentille ou un miroir non plan,

9. Dispositif optique (200 ; 300) selon la revendication 1, **caractérisé en ce que** les moyens de conjugaison (206 ; 306) opèrent en transmission et sont situés entre les optiques d'entrée (205 ; 305) et une première face (1031) du guide optique, ou directement sur cette première face (1031), ladite zone d'entrée étant située sur ladite première face.

10. Dispositif optique (200 ; 300) selon la revendication 9, **caractérisé en ce que** les éléments de collimation (207 ; 307) sont situés directement sur une face (1031 ; 1032) du guide optique.

11. Dispositif optique (200 ; 300) selon la revendication 9 ou 10, **caractérisé en ce que** les éléments de collimation (207; 307) sont agencés pour dévier les faisceaux lumineux ayant traversé les optiques d'entrée et les moyens de conjugaison, de façon à initier leur guidage dans le guide de lumière.

12. Dispositif optique (200) selon l'une quelconque des revendications 9 à 11, **caractérisé en ce que** les moyens de conjugaison (206) comprennent au moins deux microlentilles, chacune associée à une optique d'entrée.

13. Dispositif optique (300) selon l'une quelconque des revendications 9 à 11, **caractérisé en ce que** les moyens de conjugaison (306) consistent en une unique lentille commune à chacune des optiques d'entrée.

14. Dispositif optique (200 ; 300) selon l'une quelconque des revendications 9 à 13, **caractérisé en ce qu'**il comprend en outre des composants de découplage (209 ; 309) situés sur une face du guide optique et agencés pour dévier hors du guide optique, des faisceaux lumineux ayant traversé les optiques d'entrée, les moyens de conjugaison et les moyens de collimation, et s'étant propagés dans le guide optique.

15. Système optique de projection comprenant un dispositif optique de projection selon l'une quelconque des revendications précédentes, ainsi qu'un écran (101 ; 201 ; 301) composé d'une pluralité d'écrans élémentaires (1010 ; 2010 ; 3010), chaque écran élémentaire étant associé à une optique d'entrée (105 ; 205 ; 305) et à l'élément de collimation correspondant (107 ; 207 ; 307), et chaque écran élémentaire étant agencé de sorte que :
- le guide optique (103 ; 203) réalise la propagation de faisceaux lumineux provenant de chacun des écrans élémentaires ; et
- chaque élément de collimation (107 ; 207 ; 307) réalise la collimation d'un faisceau lumineux provenant d'un écran élémentaire, et ayant traversé l'optique d'entrée associée et les moyens de conjugaison.

## Patentansprüche

1. Optische Projektionsvorrichtung (100; 200; 300) für Anzeigemittel, wie Augmented-Reality-Brillen, welche einen Lichtleiter (103; 203) umfasst, **dadurch gekennzeichnet, dass** die optische Projektionsvorrichtung (100; 200; 300) aufweist:
- wenigstens zwei lichtbrechende Eingangsoptiken (105; 205; 305), die Eingangsoptiken bennant sind, und die vor einem Eingangsbereich (1033) angeordnet sind, welcher sich auf einer Seite (1031) des Lichtleiters (103; 203) befindet;
- wenigstens zwei Kollimationselemente (107; 207; 307), die eine Ablenkungsfunktion besitzen, wobei jedes Kollimationselement einer Eingangsoptik (105; 205; 305) zugeordnet ist und sich direkt auf einer Seite (1031; 1032) des Lichtleiters befindet; und
- Konjugationsmittel (106; 206; 306), die zwischen den Eingangsoptiken (105; 205; 305) und den Kollimationselementen (107; 207; 307) angeordnet sind und dafür ausgelegt sind, eine Eingangsoptik (105; 205; 305) und das zugeordnete Kollimationselement (107; 207; 307) paarweise zu konjugieren.

2. Optische Vorrichtung (100) nach Anspruch 1, **dadurch gekennzeichnet, dass** die Konjugationsmittel (106) und die Kollimationselemente (107) sich jeweils direkt auf einer Seite (1031; 1032) des Lichtleiters (103) befinden.

3. Optische Vorrichtung (100) nach Anspruch 2, **dadurch gekennzeichnet, dass** sich der Eingangsbereich auf einer ersten Seite des Lichtleiters befindet und dass die Kollimationselemente (107) wenigstens teilweise reflektierend sind und sich auf einer zweiten Seite (1032) des Lichtleiters befinden, die dieser ersten Seite gegenüberliegt.

4. Optische Vorrichtung (100) nach Anspruch 2 oder 3, **dadurch gekennzeichnet, dass** die Konjugationsmittel (106) wenigstens zwei Konjugationselemente umfassen, die jeweils einer Eingangsoptik (105) und einem Kollimationselement (107) zugeordnet sind.

5. Optische Vorrichtung (100) nach Anspruch 4, **dadurch gekennzeichnet, dass** jedes Konjugationselement (106) ein Element von einem Hologramm, einem Beugungsgitter, einem Fresnel-Spiegel oder einer Fresnel-Linse, einer Linse oder einem nicht ebenen Spiegel umfasst.

6. Optische Vorrichtung (100) nach einem der Ansprüche 2 bis 5, **dadurch gekennzeichnet, dass** die Konjugationsmittel (106) dafür ausgelegt sind, Lichtbündel abzulenken, welche die Eingangsoptiken durchquert haben, um ihre Leitung in dem Lichtleiter (103) zu initiieren.

7. Optische Vorrichtung (100) nach einem der Ansprüche 2 bis 6, **dadurch gekennzeichnet, dass** die Kollimationselemente (107) dafür ausgelegt sind, Lichtbündel, welche die Eingangsoptiken und die Konjugationsmittel durchquert haben und sich in dem Lichtleiter ausgebreitet haben, aus dem Lichtleiter (103) hinaus abzulenken.

8. Optische Vorrichtung (100) nach einem der Ansprüche 2 bis 7, **dadurch gekennzeichnet, dass** jedes Kollimationselement (107) ein Element von einem Hologramm, einem Beugungsgitter, einem Fresnel-Spiegel oder einer Fresnel-Linse, einer Linse oder einem nicht ebenen Spiegel umfasst.

9. Optische Vorrichtung (200; 300) nach Anspruch 1, **dadurch gekennzeichnet, dass** die Konjugationsmittel (206; 306) in Transmission arbeiten und sich zwischen den Eingangsoptiken (205; 305) und einer ersten Seite (1031) des Lichtleiters oder direkt auf dieser ersten Seite (1031) befinden, wobei sich der Eingangsbereich auf der ersten Seite befindet.

10. Optische Vorrichtung (200; 300) nach Anspruch 9, **dadurch gekennzeichnet, dass** sich die Kollimationselemente (207; 307) direkt auf einer Seite (1031; 1032) des Lichtleiters befinden.

11. Optische Vorrichtung (200; 300) nach Anspruch 9 oder 10, **dadurch gekennzeichnet, dass** die Kollimationselemente (207; 307) dafür ausgelegt sind, die Lichtbündel abzulenken, welche die Eingangsoptiken und die Konjugationsmittel durchquert haben, um ihre Leitung in dem Lichtleiter zu initiieren.

12. Optische Vorrichtung (200) nach einem der Ansprüche 9 bis 11, **dadurch gekennzeichnet, dass** die Konjugationsmittel (206) wenigstens zwei Mikrolinsen umfassen, die jeweils einer Eingangsoptik zugeordnet sind.

13. Optische Vorrichtung (300) nach einem der Ansprüche 9 bis 11, **dadurch gekennzeichnet, dass** die Konjugationsmittel (306) aus einer einzigen Linse bestehen, die allen Eingangsoptiken gemeinsam ist.

14. Optische Vorrichtung (200; 300) nach einem der Ansprüche 9 bis 13, **dadurch gekennzeichnet, dass** sie außerdem Entkopplungskomponenten (209; 309) umfasst, die sich auf einer Seite des Lichtleiters befinden und dafür ausgelegt sind, Lichtbündel, welche die Eingangsoptiken, die Konjugationsmittel und die Kollimationsmittel durchquert haben und sich in dem Lichtleiter ausgebreitet haben, aus dem Lichtleiter hinaus abzulenken.

15. Optisches Projektionssystem, welches eine optische Projektionsvorrichtung nach einem der vorhergehenden Ansprüche sowie einen Bildschirm (101; 201; 301), der aus mehreren Einzelbildschirmen (1010; 2010; 3010) besteht, umfasst, wobei jeder Einzelbildschirm einer Eingangsoptik (105; 205; 305) und dem entsprechenden Kollimationselement (107; 207; 307) zugeordnet ist und jeder Einzelbildschirm derart angeordnet ist, dass:
- der Lichtleiter (103; 203) die Ausbreitung von Lichtbündeln bewirkt, die von jedem der Einzelbildschirme stammen; und
- jedes Kollimationselement (107; 207; 307) die Kollimation eines Lichtbündels bewirkt, das von einem Einzelbildschirm stammt und die zugeordnete Eingangsoptik und die Konjugationsmittel durchquert hat.

## Claims

1. An optical projection device (100; 200; 300) for display means such as augmented reality glasses, comprising an optical guide (103; 203), **characterized in that** the optical projection device (100; 200; 300) having:
- at least two refractive input optics (105; 205; 305), named input optics, arranged in front of an input zone (1033) which is located on a face (1031) of the optical guide (103; 203);
- at least two collimation elements (107; 207; 307) having a deflection function, each collimation element being associated with an input optics, and located directly on a face (1031; 1032) of the optical guide; and
- conjugation means (106; 206; 306) disposed between the input optics (105; 205; 305) and the collimation elements (107; 207; 307), arranged to conjugate in twos an input optics (105; 205; 305) and the associated collimation element (107; 207; 307).

2. The optical device (100) according to claim 1, **characterized in that** the conjugation means (106) and the collimation elements (107) are each located directly on a face (1031; 1032) of the optical guide (103).

3. The optical device (100) according to claim 2, **characterized in that** the input zone is located on a first face of the optical guide and the collimation elements (107) are at least partly reflecting and located on a second face (1032) of the optical guide opposite to this first face.

4. The optical device (100) according to claim 2 or 3, **characterized in that** the conjugation means (106) comprise at least two conjugation elements, each associated with an input optics (105) and a collimation element (107).

5. The optical device (100) according to claim 4, **characterized in that** each conjugation element (106) comprises one element from a hologram, a diffraction grating, a mirror or a Fresnel lens, a lens or a non-plane mirror.

6. The optical device (100) according to any of claims 2 to 5, **characterized in that** the conjugation means (106) are arranged to deflect light beams that have passed through the input optics, so as to initiate the guiding thereof in the optical guide (103).

7. The optical device (100) according to any of claims 2 to 6, **characterized in that** the collimation elements (107) are arranged to deflect, off the optical guide (103), light beams that have passed through the input optics and the conjugation means, and that have propagated in the optical guide.

8. The optical device (100) according to any of claims 2 to 7, **characterized in that** each collimation element (107) comprises an element from a hologram, a diffraction grating, a mirror or a Fresnel lens, a lens or a non-plane mirror.

9. The optical device (200; 300) according to claim 1, **characterized in that** the conjugation means (206; 306) operate in transmission and are located between the input optics (205; 305) and a first face (1031) of the optical guide, or directly on this first face (1031), said input zone being located on said first face.

10. The optical device (200; 300) according to claim 9, **characterized in that** the collimation elements (207; 307) are located directly on a face (1031; 1032) of the optical guide.

11. The optical device (200; 300) according to claim 9 or 10, **characterized in that** the collimation elements (207; 307) are arranged to deflect the light beams that have passed through the input optics and the conjugation means, so as to initiate the guiding thereof in the light guide.

12. The optical device (200) according to any of claims 9 to 11, **characterized in that** the conjugation means (206) include at least two microlenses, each associated with an input optics.

13. The optical device (300) according to any of claims 9 to 11, **characterized in that** the conjugation means (306) consist of a single lens common to each of the input optics.

14. The optical device (200; 300) according to any of claims 9 to 13, **characterized in that** it further comprises decoupling components (209; 309) located on a face of the optical guide and arranged to deflect, off the optical guide, light beams that have passed through the input optics, the conjugation means and the collimation means, and that have propagated in the optical guide.

15. An optical projection system comprising an optical projection device according to any of the preceding claims, as well as a screen (101; 201; 301) comprised of a plurality of unit screens (1010; 2010; 3010), each unit screen being associated with an input optics (105; 205; 305) and with the corresponding collimation element (107; 207; 307), and each unit screen being arranged such that:
- the optical guide (103; 203) performs propagation of light beams from each of the unit screens; and
- each collimation element (107; 207; 307) performs the collimation of a light beam from a unit screen, and that has passed through the associated input optics and the conjugation means.
